# EUROPEAN PATENT APPLICATION

(11) **EP 3 031 881 A1**
(43) Date of publication of application: **15.06.2016**
(21) Application number: 14460098.8
(22) Date of filing: 08.12.2014
(51) Int. Cl.: C10B 53/07, F23G 5/027

(54) **Method of pyrolytic processing of polymer waste from the recycling of food packaging and a system for carrying out such method**

(71) Applicant: Innord sp. z o.o. S.K.A., 43-400 Cieszyn (PL)
(72) Inventor: DATA, Mateusz, 43-300 Bielsko-Biala (PL)
(74) Representative: Surmiak, Jan

(57) **Abstract**

A method of pyrolytic processing of polymer waste from the recycling of food packaging consists in that the prepared starting material is subjected to pyrolytic decomposition in a thermal reactor at the temperature of 600 - 800 °C, the post-pyrolytic mixture is then separated in the collection chamber from the carbonizate and the remaining pyrolytic gas is subjected to a process of purification. The purification consists in that the gas is pre-separated from solids in a cyclone, then sprinkling in a scrubber with oil at a temperature of 70-110 °C to remove the remaining solid impurities and heavy oil fractions and next, gas is subjected to subsequent cooling, firstly to the temperature of 85-160 °°C in a first condenser to condenser the remaining heavy oil fractions and secondly to the temperature of 25-60 °C in a second condenser to obtain light oil fractions. The combined heavy oil fractions, after its passing through a heat exchanger and purification from solids and water in a separator are collected in a tank Z1 from which are partly fed back to said sprinkling process, whereas light oil fractions are collected in a tank Z2. The purified gas is further subjected to a final purification in a filtration column for removing residual hydrocarbon vapors and water to give the final product as a pure gas having a composition and energy parameters similar to those of natural gas.

The present invention also relates to a system for carrying out such a method.

## Description

The invention relates to a pyrolysis method for processing polymer waste, particularly from the recycling of food packaging, and a system for carrying out such method. The invention finds applicability in waste processing plants or facilities recycling selected materials.

The dynamic growth of polyolefin manufacture worldwide and widespread use of polyolefins in many areas of life causes an excessive production of polymer waste, which usually goes to landfill sites, occupying a lot of space there. Such waste materials include, among others, multi-layer cartons for foods, principally liquid foods, which constitute a big part of the waste produced worldwide. Waste utilisation and possible waste reuse become therefore a major problem.

Taking account of environmental protection aspects, one of the used solutions is to dispose of the said multi-layer packs and then to separate the polymer layers and subject them to material recycling.

The most popular method of separating polymer material from composite food packaging is the paper method, which consists in the mechanical separation of paper fibres from the polymer material in an aqueous environment. The polymer waste so obtained, in the form of laminates which comprise mainly polyethylene, polypropylene and aluminium, can be subjected to the pyrolysis process.

Currently in the literature concerned with this field it is possible to find numerous references to technical solutions related to waste pyrolysis processes.

The Polish patent application P-338 274 discloses a method and an apparatus for thermal waste utilisation through pyrolysis. The method comprises simultaneous use of a gaseous heat-transfer medium, obtained through burning semi-coke, being the degassing residue, and pyrolysis of waste. Pyrolysis is carried out by way of allothermal and non-pressurised pyrolysis of waste at temperatures not exceeding 750 °C. The apparatus for the thermal waste utilisation comprises interconnected technological nodes, which include: collection of waste in a tank, shredding of waste, separation of scrap steel, a pyrolysis of waste, milling of semi-coke, separation of granulated Al and Cu and semi-coke oversize particles, incineration of semi-coke and carbonizate, quenching of slag. The apparatus also comprises nodes in the gas line, responsible for drying and milling of coal, gasification of coal, separation of the carbonizate, recovery of heat, purification of gas, and cooling of the carbonizate. The purpose of the solution is to produce a pure combustible gas for energy and/or industry uses.

The Polish patent application P-317 044 discloses a method and an apparatus for gradual pyrolysis of waste. The process is conducted under pre-vacuum or small pressure. Waste can be contaminated and can originate from any source, and thus can be natural, animal, organic, cellulose, synthetic, chemical waste. The presented method consists in that vapours of the listed waste materials originating as a result of pyrolysis are subjected to a physicochemical reaction with an auxiliary fluid, the fluid being adapted to the temperature and the nature of the vapours, and being combinable with catalysts in a solution or fluid catalysts. The apparatus in the form of an installation essentially comprises a large multi-wall furnace, which operates under vacuum with diversified values. The furnace is connected to heating means and to one or more pumps, which pump liquid into the reaction carried out with volatile products. Combining liquid waste with small-particle solids allows for continuous processing. A high-temperature device decomposes complex volatile products and scattered particles. Combining a number of installations enables carrying out chemical reactions and synthesis simultaneously.

The Polish patent PL 179 990 discloses a solution related to an apparatus for pyrolysing solid materials. The apparatus comprises a rotary furnace, inside of which the materials are pyrolysed, and a unit for heating the rotary furnace. The apparatus moreover comprises a preheating unit for preheating the solid materials to be fed into the furnace. The preheating unit has at least two preheating zones, where the solid materials are preheated to different temperatures, and additionally has a gas extraction unit, where carbonization gases produced in the pyrolysis are stored after they pass through at least one preheating zone. Between the rotary furnace and the preheating unit there is a sealed joint of the two units.

The patent PL 208 922 discloses a system for carrying out pyrolysis of waste plastics and a process for carrying out pyrolysis. The process is particularly related to polyolefin waste and is connected with the removal of carbonization products and post-reaction residue. The system for carrying out pyrolysis of waste plastics comprises a unit for feeding the materials, a pyrolysis reactor, and a product collection unit. The system is characterised in that the product collection unit comprises a gas separation regulator equipped with a mixer and at least one external pyrolysis reactor operating in closed cycle. The process for carrying out pyrolysis with the removal of carbonization products and post-reaction residue in an inert gas environment consists in that continuous pyrolysis is carried out with use of a reactor with forced bidirectional mixing of the materials, where one direction of mixing is also used to remove post-reaction residue.

The Polish patent application no. P-367 011 discloses a method for continuous processing of plastic wastes to obtain hydrocarbon mixture and a system for this method. The method is characterised in that the processing is conducted as a continuous process in a system heat exchanger/stabiliser, where a process of fluidisation and partial vaporisation of plastics is carried out in the heat exchanger, and a main process of vaporisation of the melt self-flowing from the exchanger is carried out in the stabiliser, while gaseous vaporisation products are directed into a separator. The system for this method is characterised in that a reaction system is a system heat exchanger/stabiliser, and a separator, connected through feeding conduits with the stabiliser and a product tank, is located directly behind the stabiliser.

Another published document, patent application P-399 500, discloses a method for carrying out pyrolysis of waste plastics and/or waste rubber and/or organic waste, which comprises subjecting those materials to thermal decomposition in a pyrolysis reactor, without access of air, at a temperature between 200 and 850 °C, and then separating the obtained products in a fractionating column. The described method consists in that the process is carried out in a continuous and emission-free manner, under reduced pressure, and the circulating gases are sucked into the pyrolysis installation, with use of a vacuum pump, from the tanks of final products and from the separator of solid and gaseous particles, which are also connected to the pyrolysis reactor, and from the fractionating column and from the heat exchangers, so that in all those interconnected elements of the pyrolysis installation an even reduced pressure of 0,1 to 0,9 atm is maintained.

The Polish patent description PL 191 275 discloses a process and apparatus for producing lower olefins with use of a hydrocarbons pyrolysis process. The described process covers heating and vaporising the hydrocarbon material and, next, mixing it with a diluter being in a vapour phase, then thermal cracking of the obtained mix in a rotating blade reactor using the heat that was produced inside the volume of the reacting mix as a result of hydrodynamic resistance of the blades rotating in the mix, then cooling of the cracked gas, and carrying out the separation process. Heating the reaction mix up to the pyrolysis temperature is carried out by mixing with a hot pyrolysis gas that circulates in the working chamber of the rotating blade reactor over a very brief period of time as compared to the duration of the pyrolysis reaction. Thanks to the process, it is possible to increase the productivity of lower olefins.

The Polish patent PL 180 560 discloses a method and apparatus for thermal treating of waste materials. In a first thermal treatment zone, waste materials are subjected to pyrolysis in a rotary furnace and the carbonization gas so produced is rendered at least 90% dust-free and then it is subjected to incineration. The possible exhaust fumes are subjected to denitrogenation directly or are cooled first and then subjected to catalytic denitrogenation. After the denitrogenation, harmful substances are removed from the fumes by adding appropriate reactants with use of filtration.

The description of the United States Patent no. 6,534, 689 discloses a process for pyrolysis of waste plastics leading to the production of fuels. Cyclones are used to separate solids and liquids from the gaseous phase, with use a speed of the medium and a high temperature of the inert gas which simultaneously is a heat carrier. The inert gas and hydrocarbon gas are used for heating.

The Canadian patent application CA-2849384 (A1) discloses an installation for the pyrolysis of a product in the form of divided solids, in particular polymer waste such as plastics, rubbers or elastomers. Said installation comprises a device for preconditioning the product and bringing it to a state suitable for facilitating the pyrolysis. The installation further comprises a pyrolysis reactor. The reactor has an inlet connected in a leak-tight manner to an outlet of the preconditioning device, which is equipped with at least one heating transfer member for transferring the product, while pyrolysing it, from the inlet to an outlet of the reactor. Said element is in the form of a conveying screw or of a vibrated tube. The preconditioning device comprises liquefaction means for bringing the product at the outlet of the preconditioning device to a liquid state at an outlet temperature, and also regulation means for regulating the temperature of the product at the outlet of the preconditioning device.

The Polish patent description PL 216 560 discloses a solution related to pyrolysis of waste plastics. Pyrolysis is carried out at a temperature and under conditions that facilitate the formation of coke or coke-like substances. The described method consists in that during pyrolysis the reaction melt is circulated, advantageously periodically, by taking from the pyrolyser and pumping a portion of the reaction melt in the form of a circulating stream and feeding it into a setting tank, and before the setting tank the stream is divided and directed, partially or interchangeably, to the setting tank, and partially or interchangeably it is injected into the pyrolyser above the reaction zone to the waste gases zone and/or to the reaction melt. The circulating stream directly fed to the reaction melt is fed at a certain angle to the surface of the reaction melt and the speed of the injected stream is selected so that the stream is able to break through the reaction melt to above its surface, and the reaction melt in the setting tank is left to separate. The lighter, top fractions from the setting tank are directed back to the pyrolyser, and the heavy fraction is removed or, when filled with it, the setting tank or an additional container of heavy fraction, placed beneath the setting tank, is substituted.

The Polish patent application P-399 499 discloses a method for continuous carrying out the process of pyrolysis of waste plastics and/or waste rubber and/or organic waste, which comprises subjecting those materials to thermal decomposition in a pyrolysis reactor, without access of air, at a temperature between 200 and 850 °C, under atmospheric pressure or under increased pressure or reduced pressure. The presented method consists in that a chemical modifier composition comprising water, at least one aliphatic alcohol, carbamide or its derivatives and monoacetylferrocene is dosed into the reactor chamber, and before dosing into the reactor the composition is additionally diluted with water so that after dilution it contains 5% by weight of composition and 95% by weight of water, up to 15% by weight of composition and 85% of water.

The British patent application GB 792919 (A) discloses a process for extracting light oil from carbonization gas. Light oils are extracted from coal gas by washing the gas with an oil produced by the hydrogenization of tar and/or coal and which is free from phenols. The phenols in the starting material are first removed by hydrogenization in the presence of compounds of the elements from the 6th group of the periodical system as catalysts, particularly in the presence of sulphides such as tungsten disulphide. Used wash oil may be regenerated by a similar treatment.

The European patent application EP00/25100 (A1) discloses a method for the condensation of carbonization gas produced by waste pyrolysis. The method consists in that the hot carbonization gases produced in the pyrolysis are passed through a spray curtain of condensed carbonization gases, and the carbonization gas condensate produced in this process is cooled further and partly used to produce the spray curtain.

The Japanese patent application JP2007222766 (A) discloses a method for processing a pyrolysis gas that processes a pyrolysis exhaust gas of an organic waste such as sewage sludge. The method consists in that an alkali agent slurry of high temperature as it stands is supplied into an exhaust gas discharged from a furnace. Next, an obtained product is removed and processed with a high temperature ceramic filter. Thereafter, the exhaust gas discharged from the filter is introduced into a washing tower and is washed with an alkali washing water containing a cobalt compound. Next, a part of the washing water is circulated into the tower while the washing water is deaerated in a circulating tank. Meanwhile, the effluent from the tank is introduced into an oxidizing tower and is ozonated with a catalyst.

The Polish patent application P-400645 discloses a method for pyrolysis and gasification of biomass and waste substances in which the temperature for pyrolysis and gasification is obtained by way of exothermic processes. The solution is characterised in that the waste substances and biomass are directly fed to the installation, where the pyrolysis feedstock is dried and warmed up to a temperature of about 70 °C. Next, pyrolysis is carried out at a temperature of 200-800 °C, obtained by an autogenous exothermic process of decomposition of the processed mass, and next gasification is carried out at a temperature of 800-950 °C, obtained as a result of combustion the synthetic gas produced as a result of decomposition. A combustion process of the synthetic gas is carried out in a furnace chamber isolated from the external air, to which the gas is fed together with the air at proportions which enable regulating the intensity of combustion with the temperature maintained at not less than 1100 °C. The incinerated particles are in the chamber for at least 2 seconds even during combustion of dangerous waste containing organochlorines in an amount of over 1% chlorine, after which the fumes are transferred to a heat exchanger to warm up the conditioned water circulating in a high-pressure thin pipe system. The majority of fumes at a temperature of 450-500 °C is collected from the exchangers and is directed to warm up the cylinder block and the cylinder head of a steam engine. A part of the produced gas, after it leaves the steam engine under pressure of 10-12 bar, is directed to injectors, where it is sucked in by water under pressure of 60-70 bar. Sulphur dioxide and nitrogen oxides are dissolved in water, thus producing sulphuric acid and nitric acid, while carbon dioxide dissolved in water is released by way of lowering the water pressure to 1-3 bar. Mineral and metal residue and ashes not pyrolysed or gasified are subjected to vitrification, which consists in melting them at a temperature of at least 1600 °C, and then rapidly cooling in a water bath at a temperature of about 100 °C, thus producing a granulated solidified mass in the form of pellets.

The Polish patent application P-401 930 discloses a process of pyrolysis carried out in a reactor and in at least one superheater, which are connected in a loop. Into the reactor are fed waste plastics, which contact the heated mass from the superheater, and next the mass is transported from the reactor to the superheater, after which in the superheater it is heated up to a temperature higher than the depolymerization temperature of the plastics. The pace at which the mass flows from the reactor to the superheater is selected depending on the superheater's volume, so that the superheater is always full and the mass indirectly heated inside it overflows at its end opposite to the place of feeding the materials to the reactor. In the superheater the melt plastics are superheated, depolymerization starts, and part of the mass undergoes depolymerization. The reactor can be heated by exhaust gases, electrically, or in any other way. Constant movement of the mass is forced. Since the superheater is filled with the mass, possibly produced volatile products of depolymerization are suspended in the liquid phase. Volatile products of depolymerization produced in the superheater are released and collected at the top of the reactor together with volatile products of depolymerization initiated in the superheater and produced in the reactor. All the volatile products are then subjected to further processing in a known manner.

The description of the Polish patent PL 209 474 discloses an apparatus for pyrolysis of plastic wastes operating under a normal pressure, reduced pressure or increased pressure. The apparatus comprises a reactor heated indirectly, a feeder of plastic wastes, and an outlet for pyrolysis products. The reactor has at least one heating element fitted inside the reaction chamber in the form of a curved heating pipe, its length-to-diameter ratio being at least 10, preferably in the range of 50-250, which has an inlet heating pipe and a burner fitted inside it, and the heating pipe is preferably supported by at least one support according to the PL 194973 patent. The apparatus is moreover characterised in that at the bottom part of the reactor there is a sparge pipe having at least one opening.

Even though there have been disclosed many solutions related to methods of processing and treatment of various polymer-containing waste materials through pyrolytic processes as well as systems for carrying out such methods, there still exists a big demand for developing a method of pyrolytic decomposition and processing of polyolefin waste produced in the course of recycling, particularly by the paper method, of containers and packs for foodstuffs, in which the obtained final product is a dehydrated and purified hydrocarbon gas having a wide range of uses, and where is it possible to also effectively use other products produced in the pyrolysis. This demand also entails a necessity to develop a system for carrying out the pyrolytic method of processing polymer wastes from food packaging that would ensure an effective process of pyrolysis and effective use of its products.

It is therefore an aim of the present invention to provide a pyrolysis method for processing polymer waste from the recycling of food packaging and a system for carrying out such method. Thus the subject-matter of the present invention is a method and a system for processing by pyrolysis of polymer waste from the recycling of food packaging.

According to the invention, a method for pyrolytic processing of polymer waste, particularly from the recycling of food packaging, comprising the steps of: preparation of the starting materials, pyrolytic decomposition of the materials in a thermal reactor at a temperature in the range of 600 to 800 °C, separation of the carbonizate from the post-pyrolytic gases produced during the pyrolysis process, and purification of the post-pyrolytic gases, is characterised in that the step of purification of the post-pyrolytic gases produced during the pyrolysis involves a pre-separation of the synthesis gas from solid impurities in a cyclone. Next, the synthesis gas is subjected to purification from the remaining solid particles and from heavy oil fractions by means of sprinkling the gas by oil having a temperature of 70-110 °C. This step of the process is preferably carried out in a Venturi scrubber. The pre-purified and cooled synthesis gas is then directed to a first condenser, where it is cooled down to a temperature of 85 to 160 °C and where the remaining heavy oil fractions are condensed, which are then transferred, through a heat exchanger, to a separator where after its combining with the sprinkling oil and after separating from water and solid particles, the heavy oil fractions are collected in the tank Z]. The synthesis gas which leaves the first condenser is transferred to a second condenser, where it is further cooled to a temperature of 25 to 60 °C and where light oil fractions are condensed, which are collected in the tank Z2, and the synthesis gas, after condensation of oil fractions, is subjected to a final purification by dehydration and condensation of residual hydrocarbon vapours in a filtration column filled with a coalescent-filtration material, thus producing the final product in the form of a pure hydrocarbon gas.

For the invention is advantageous when the fraction of solid impurities separated in a separator is subjected again to a process of thermal decomposition in the reactor, and when the separated water is used to cool down the carbonizate, while the pure oil is transferred again to the oil scrubber for sprinkling the synthesis gas.

For the invention is also advantageous when the synthesis gas in a first condenser is cooled to a temperature of about 125 °C and when the synthesis gas in a second condenser is cooled to a temperature of about 40 °C.

The subject-matter of the present invention is also a system for pyrolytic processing of polymer waste from the recycling of food packaging.

A system for pyrolytic processing of polymer waste from the recycling of food packaging, comprising a feeder of the starting material, a thermal reactor, a collection chamber, and a plant for purification of post-pyrolytic gases produced in the pyrolysis process, the listed elements of the system being interconnected so that an exit of the feeder is connected to an entry of the thermal reactor, and an exit of the thermal reactor is connected to an entry of the collection chamber, whose exit is connected to an entry to a plant for purification of post-pyrolytic gases, according to the invention is characterised in that the plant for purification of post-pyrolytic gases consists of a cyclone, an oil scrubber, two condensers: the first condenser of the heavy oil fractions and the second condenser of the light oil fractions, and a filtration column, and additionally of auxiliary equipments comprising a heat exchanger, an oil separator, and tanks for the products including a tank Z1 for heavy oil fractions, a tank Z2 for light oil fractions, a tank Z3 for post-filtration condensates, and a tank for purified gases. The listed elements of the plant are interconnected so that an entry of the cyclone is connected to an exit of the collection chamber, arid an exit of the cyclone is connected to a gas entry of the oil scrubber. The oil scrubber has two exits, an oil exit and a gas exit. The oil exit is connected, through a heat exchanger of scrubber oil, to an entry of the separator, whose exit is connected, through the tank Z1, again to an entry of the oil scrubber, thereby forming a scrubber oil feedback loop, while the gas exit of the oil scrubber is connected to an entry of the first condenser. The first condenser also has two exits, an oil exit and a gas exit, the oil exit being connected, through the exchanger, to an entry of the separator, and the gas exit being connected to an entry of the second condenser. The second condenser also has two exits, an oil exit and a gas exit, the oil exit being connected to the tank Z2 and the gas exit being connected to an entry of the filtration column, which has two exits, a gas exit and an exit for the post-filtration condensates, wherein the gas exit is connected to a tank for the purified gas while an exit for the post-filtration condensates is connected to an entry of the tank Z3. Optionally, the exit of the post-filtration condensates is connected to the first condenser and to the second condenser, in order to wash the paraffin deposits collected in the condensers.

The method according to the invention allows obtaining a valuable product from waste materials, namely, a gas dehydrated and purified from solid impurities, for use in chemical synthesis or as fuel.

Moreover, the process according to the invention yields valuable products in the form of heavy and light oil fractions that are capable of being used as fuels.

In its final step the process can also render a fraction of light hydrocarbons that are used as a solvent to wash paraffin deposits in the condensers of oil fractions of the gas being purified.

Thanks to sprinkling of the impure gas with oil partially mixed with the oil taken from the gas being purified (feedback closed-cycle circulation of oil in a Venturi scrubber) the method according to the invention makes it possible to avoid problems connected with the alternative way of purifying the gas using water (e.g. storing a large volume of waste water and problems related to purifying or disposing of it).

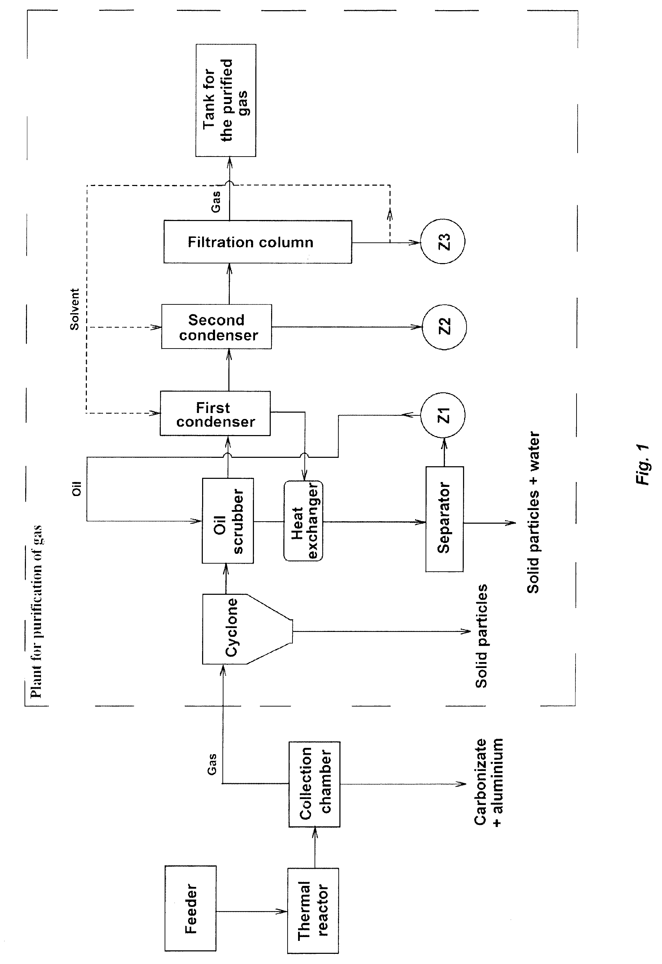

Examples of carrying out the method and an example of a system for pyrolytic processing of polymer waste coming from recycled aluminized packaging for foodstuffs, according to the invention, are presented below. The subject-matter of the invention is also presented in a drawing, Fig. 1, which shows a schematic chart of the technological process according to the invention.

### Examples concerning the method

### Example 1

The starting material for processing, in the form of polymer waste coming from recycled packaging for foodstuffs, constituting a mixture of polymers containing mainly polyethylene, polypropylene, and laminates of polypropylene and aluminium, was mechanically shredded to obtain a fraction size of about 25 mm. The material so treated was supplied to a feeder, from which it was conveyed in an oxygen free manner to a thermal reactor at a rate of about 150 kg/h. Inside the thermal reactor the material was transported by means of a screw conveyor. Pyrolysis in the thermal reactor was carried out at a temperature of about 600 °C obtained by heating the reactor externally. As a result of the pyrolysis process a mixture was obtained with the following composition: volatile products (65%) in the form of hydrocarbon gases (30%) and hydrocarbon vapours (35%), carbonizate and aluminium (27%) and water vapour (8%). Next, the mixture having a temperature of about 500 °C passes into a collection chamber, where a synthesis gas is separated from the carbonizate and aluminium, which gravitationally sank to the bottom of the collection chamber, from where they were removed in a continuous manner from the system, leaving the synthesis gas in the chamber.

The synthesis gas produced in the pyrolysis, having a temperature of about 500 °C, leaving the collection chamber under the influence of a thermal pressure change to 2,5 kPa, flew through a reducer into a cyclone, where larger particles of solid impurities were separated from the gas. The synthesis gas, having a temperature of about 400 °C, was further passed to an oil Venturi scrubber, where it was subjected to oil sprinkling with an oil having a temperature of about 80 °C. In the Venturi scrubber the gas was cooled down to a temperature of about 200 °C, which caused condensation of heavy hydrocarbon vapours (C19-C40). During the sprinkling process the solid residues in the form of dust carried by the gas were washed down by the sprinkling oil and together with it they reached, passing through a heat exchanger, a Tricanter-type separator, in which dust and water were separated from the oil. The oil fractions obtained as a result of condensation of heavy hydrocarbon vapours, after passing through the Tricanter separator, were stored together with the sprinkling oil in a tank Z1. A portion of the oil from the tank Z1 was returned back to sprinkle the synthesis gas in the Venturi oil scrubber, and the excess of the oil was removed for use for energy purposes.

The synthesis gas without the heavy oil fractions, having a temperature of about 200 °C, after leaving the Venturi scrubber, was directed to a first condenser. In the first condenser, the synthesis gas was cooled down by an oil for sprinkling to a temperature of about 95 °C. In this temperature, the remaining heavy oil fractions (C15-C24) were condensed from the synthesis gas and they also reached the tank Z1 through the heat exchanger and the separator.

After leaving the first condenser, the synthesis gas was directed to a second condenser. In the second condenser the synthesis gas was cooled down to a temperature of about 35 °C, which resulted in condensation of light oil fractions (C8-C17), and the second condenser was cooled with water, its temperature, appropriate for the process, being maintained thanks to the heat exchanger. The light oil fraction from the second condenser was collected and stored in a tank Z2.

After passing through the last condensation step in the second condenser, the synthesis gas, without the heavy and light oil fractions, but still humid, was directed to a filtration column, fitted with a demister mesh and a set of filters, where residual amounts of hydrocarbon and water vapours were removed. At the entrance point to the filtration column the synthesis gas was slightly heated to prevent a decrease in its temperature in the filtration column and the filters from blocking. Upon leaving the filtration column the temperature of the synthesis gas was about 25 °C. The residues of hydrocarbon (C5-C10) and water vapours condensed in the filtration column were stored in a tank Z3. The condensates stored in the tank Z3 were periodically used as solvents to wash paraffin deposits in the first and second condensers. The gas purified in the filtration column was subjected to chromatography analysis and its heating value was determined. The composition of the gas and its energy parameters are presented in Table 1 below:

**Table 1**

| **Ingredient** | **Unit** | **Quantity** |
|---|---|---|
| hydrogen | % [mol/mol] | 13,8 |
| CO₂ | % [mol/mol] | 13,8 |
| nitrogen | % [mol/mol] | 0,7 |
| CO | % [mol/mol] | 18,5 |
| methane | % [mol/mol] | 17,1 |
| ethane | % [mol/mol] | 3,5 |
| ethylene | % [mol/mol] | 14,7 |
| propane | % [mol/mol] | 0,6 |
| propylene | % [mol/mol] | 10,5 |
| 1-butene | % [mol/mol] | 1,3 |
| isobutene | % [mol/mol] | 0,8 |
| trans-2-butene | % [mol/mol] | 0,4 |
| cis-2-butene | % [mol/mol] | 0,3 |
| 1,3-butadiene | % [mol/mol] | 1,7 |
| propadiene | % [mol/mol] | 2,4 |
| heat of combustion | MJ/m³ | 45,2 |
| heating value | MJ/m³ | 42,0 |

It has been found that the gas obtained following the method according to the invention had a composition and energy parameters close to those of natural gas, which made it possible to further use it as combustion gas. At each step of the method described above the parameters were measured, including pressure and temperature in the entire installation, to guarantee the correct course of the process.

### Example 2

The starting material for processing, in the form of polymer waste coming from recycled packaging for foodstuffs, constituting a mixture of polymers containing mainly polyethylene, polypropylene, and laminates of polypropylene and aluminium, was mechanically shredded to obtain a fraction size of about 25 mm. The material so treated was supplied to a feeder, from which it was conveyed in an oxygen free manner to a thermal reactor at a rate of about 350 kg/h. Inside the thermal reactor, heated externally, the material was transported by means of a screw conveyor. Pyrolysis in the thermal reactor was carried out at a temperature of about 700 °C. As a result of the pyrolysis process a mixture was obtained with the following composition: volatile products (65%) in the form of hydrocarbon gases (35%) and hydrocarbon vapours (30%), carbonizate and aluminium (27%) and water vapour (8%).. After leaving the thermal reactor and passing into a collection chamber, carbonizate and aluminium gravitationally sank to the bottom of the collection chamber, from where they were removed in a continuous manner from the system, leaving the synthesis gas in the chamber.

The synthesis gas produced in the pyrolysis (after the removal of the carbonizate and aluminium), having a temperature of about 550 °C, automatically left the collection chamber as a result of a thermal pressure change to 4 kPa, and then it flew through a reducer into a cyclone. In the cyclone larger particles of solid impurities were removed. The synthesis gas, having a temperature of about 450 °C, was further passed to a Venturi oil scrubber, where it was subjected to oil sprinkling with an oil having a temperature of about 90 °C. In the Venturi oil scrubber the gas was cooled down to a temperature of about 220 °C, which caused condensation of hydrocarbon vapours. During the sprinkling process the dust residues carried by the gas were washed down with the sprinkling oil and together they reached, through a heat exchanger, a Tricanter-type separator. The oil obtained as a result of condensation of heavier hydrocarbon vapours, after passing through the separator, was stored together with the sprinkling oil in a tank Z1. The oil from the tank Z1 was partially used to sprinkle the synthesis gas in the Venturi oil scrubber, and the excess of the oil was removed and used for energy purposes.

Next, the synthesis gas, without the heavy oil fractions (C19-C40), having a temperature of about 220 °C, after leaving the Venturi scrubber, was directed to a first condenser. In the first condenser, the synthesis gas was cooled down by an oil for sprinkling to a temperature of about 125 °C. In this temperature, heavy oil fractions (C15-C24) were condensed from the synthesis gas, and after passing through the heat exchanger and the Tricanter-type separator they were stored in the tank Z1.

After leaving the first condenser, the synthesis gas was directed to a second condenser. In the second condenser the synthesis gas was cooled down to a temperature of about 40 °C, which resulted in condensation of light oil fractions, and the second condenser was cooled with water, its temperature, appropriate for the process, being maintained thanks to the heat exchanger. The light oil fraction (C8-C17) was collected from the second condenser and stored in a tank Z2.

After passing through the last condensation step in the second condenser, the humid synthesis gas was directed to a filtration column. At the entrance point to the filtration column the synthesis gas was slightly heated to prevent a decrease in its temperature in the filtration column and the filters from blocking. In the filtration column, fitted with a demister mesh and a set of filters, the remaining residual amounts of hydrocarbon and water vapours were condensed from the synthesis gas. Upon leaving the filtration column the temperature of the synthesis gas was about 30 °C. The liquid products condensed in the filtration column were collected and stored in a tank Z3. The condensates stored in the tank Z3 were periodically used as solvents to wash paraffin deposits in the first and second condensers. The gas purified by means of the described method was subjected to chromatography analysis and its heating value was determined. The composition of the gas and its energy parameters are presented in Table 2 below:

**Table 2**

| **Ingredient** | **Unit** | **Quantity** |
|---|---|---|
| hydrogen | % [mol/mol] | 16,7 |
| CO₂ | % [mol/mol] | 12,6 |
| nitrogen | % [mol/mol] | 0,4 |
| CO | % [mol/mol] | 17,4 |
| methane | % [mol/mol] | 20,5 |
| ethane | % [mol/mol] | 3,0 |
| ethylene | % [mol/mol] | 16,3 |
| propane | % [mol/mol] | 0,4 |
| propylene | % [mol/mol] | 7,7 |
| 1-butene | % [mol/mol] | 0,6 |
| isobutene | % [mol/mol] | 0,6 |
| trans-2-butene | % [mol/mol] | 0,3 |
| cis-2-butene | % [mol/mol] | 0,2 |
| 1,3-butadiene | % [mol/mol] | 1,4 |
| propadiene | % [mol/mol] | 2,4 |
| heat of combustion | MJ/m³ | 40,2 |
| heating value | MJ/m³ | 37,3 |

It has been found that the gas obtained following the method according to the invention had energy parameters close to those of natural gas, which made it possible to further use it as combustion gas. At each step of the method described above the parameters were constantly measured, including pressure and temperature in the entire installation, to guarantee the correct course of the process.

### Example 3

The starting material for processing, in the form of polymer waste coming from recycled packaging for foodstuffs, constituting a mixture of polymers containing mainly polyethylene, polypropylene, and laminates of polypropylene and aluminium, was mechanically shredded to obtain a fraction size of about 25 mm. The material so treated was supplied to a feeder, from which it was conveyed in an oxygen free manner to a thermal reactor at a rate of about 500 kg/h. Inside the thermal reactor, heated externally, the material was transported by means of a screw conveyor. Pyrolysis in the thermal reactor was carried out at a temperature of about 800 °C. As a result of the pyrolysis process a mixture was obtained as follows: volatile products (65%) in the form of hydrocarbon gases (37%) and hydrocarbon vapours (28%). After the mixture left the thermal reactor and passed into a collection chamber, carbonizate and aluminium gravitationally sank to the bottom of the collection chamber, from where they were removed in a continuous manner from the system, leaving the synthesis gas in the chamber.

The synthesis gas produced in the pyrolysis (after the removal of the carbonizate and aluminium), having a temperature of about 600 °C, left the collection chamber by itself as a result of a thermal pressure change to 6 kPa, and then it flew through a reducer into a cyclone. In the cyclone, larger particles of solid impurities were removed. The synthesis gas, having a temperature of 500 °C, was further passed to a Venturi oil scrubber, where it was sprinkled with an oil having a temperature of 100 °C. In the Venturi oil scrubber the synthesis gas was cooled down to a temperature of about 250 °C, which caused condensation of hydrocarbon vapours. During the sprinkling process the dust residues carried by the synthesis gas were washed down with the sprinkling oil and together they reached, through a heat exchanger, a Tricanter separator. The oil obtained as a result of condensation of hydrocarbon vapours, after passing through the separator, was stored together with the sprinkling oil in a tank Z1. The oil from the tank Z1 is used to sprinkle the synthesis gas in the Venturi oil scrubber, and the excess of the oil can be used for energy purposes.

Next, the synthesis gas, without the heavy oil fractions (C19-C40), having a temperature of about 250 °C, after leaving the Venturi scrubber, was directed to a first condenser. In the first condenser, the synthesis gas was cooled down by an oil for sprinkling to a temperature of about 150 °C. In this temperature, heavy oil fractions (C15-C24) were condensed from the synthesis gas, and they were directed through the heat exchanger and the Tricanter separator to the tank Z1.

After leaving the first condenser, the synthesis gas was directed to a second condenser. In the second condenser the synthesis gas was cooled down to a temperature of about 50 °C, which resulted in light oil fractions (C8-C17) being condensed from the gas, and the second condenser was cooled with water, and its temperature, appropriate for the process, was maintained thanks to the heat exchanger. The light oil fraction was collected from the second condenser and it was stored in a tank Z2

After passing through the last condensation step in the second condenser, the humid synthesis gas was directed to a filtration column. At the entrance point to the filtration column the synthesis gas was slightly heated to prevent a decrease in its temperature in the filtration column and the filters from blocking. In the filtration column, fitted with a demister mesh and a set of filters, the remaining residual amounts of hydrocarbon and water vapours were condensed from the synthesis gas. Upon leaving the filtration column the temperature of the synthesis gas was about 40 °C. The residues of hydrocarbon and water vapours condensed in the filtration column were stored in a tank Z3. The condensates stored in the tank Z3 were periodically used to wash paraffin deposits in the first and second condensers. The gas purified by means of the described method was subjected to chromatography analysis and its heating value was determined. The composition of the gas and its energy parameters are presented in Table 3 below:

**Table 3**

| **Ingredient** | **Unit** | **Quantity** |
|---|---|---|
| hydrogen | % [mol/mol] | 19,5 |
| CO₂ | % [mol/mol] | 8,2 |
| nitrogen | % [mol/mol] | 0,2 |
| CO | % [mol/mol] | 12,5 |
| methane | % [mol/mol] | 30,4 |
| ethane | % [mol/mol] | 3,5 |
| ethylene | % [mol/mol] | 18,5 |
| propane | % [mol/mol] | 0,7 |
| propylene | % [mol/mol] | 2,5 |
| 1-butene | % [mol/mol] | 1,3 |
| isobutene | % [mol/mol] | 0,7 |
| trans-2-butene | % [mol/mol] | 0,1 |
| cis-2-butene | % [mol/mol] | 0,2 |
| 1,3-butadiene | % [mol/mol] | 0,5 |
| propadiene | % [mol/mol] | 1,6 |
| heat of combustion | MJ/m³ | 35,6 |
| heating value | MJ/m³ | 32,8 |

It has been found that the gas obtained following the method according to the invention had a composition and energy parameters close to those of natural gas, which made it possible to further use it as combustion gas. At each step of the method described above the parameters were constantly measured, including pressure and temperature in the entire installation, to guarantee the correct course of the process.

### Example concerning the system

A system for carrying out the method comprises a feeder of the starting material, a thermal reactor, a collection chamber, and an assembly of devices for purification of carbonization gases produced in the pyrolysis, the listed elements of the system being interconnected so that an exit of the feeder is connected to an entry of the thermal reactor, and an exit of the thermal reactor is connected to an entry of the collection chamber, whose exit is connected to an entry to the assembly of devices for purification of carbonization gases. The assembly of devices for purification of carbonization gases comprises a cyclone, an oil scrubber, two condensers, a filtration column, as well as a heat exchanger, a separator, and a tank for heavy oil fractions Z1, a tank for light oil fractions Z2, and a tank for post-filtration condensates Z3, the listed elements of the assembly of devices being interconnected so that an entry of the cyclone is connected to an exit of the collection chamber, and an exit of the cyclone is connected to a gas entry of the oil scrubber, the oil scrubber having two entries and two exits, oil and gas, where an oil exit is connected, through a heat exchanger of scrubber oil, to an entry of the separator, whose exit is connected, through the tank Z1, again to an entry of the oil scrubber, thereby forming a scrubber oil feedback loop, while a gas exit of the oil scrubber is connected to an entry of the first condenser, which also has two exits, an oil exit and a gas exit, the oil exit of the first condenser being connected, through the exchanger, to an entry of the separator, and the gas exit being connected to an entry to the second condenser, which also has two exits, an oil exit and a gas exit, the oil exit being connected to the tank for light oil fractions Z2 and the gas exit being connected to an entry of the filtration column, which has two exits, and a gas exit is connected to a tank for the purified gas while an exit for the condensates is connected to an entry of the tank Z3 and to the entry of the first condenser and to the entry of the second condenser.

## Claims

1. A method of pyrolytic processing of polymer waste, particularly from the recycling of food packaging, comprising the steps of: preparation of the starting materials, pyrolytic decomposition of the materials in a thermal reactor at a temperature in the range of about 600 to 800 °C, separation of the carbonizate from the post-pyrolytic gases, and purification of the remaining post-pyrolytic gases, **characterised in that** the step of purification of the post-pyrolytic gases produced during the pyrolysis process involves a pre-separation of the gas from solid impurities in a cyclone, and next, the gas, as the synthesis gas, is subjected to purification from the remaining solid particles and heavy oil fractions by means of sprinkling the gas by oil having a temperature of about 70-110 °C, after which the purified and cooled synthesis gas is directed to a first condenser, where it is cooled down to a temperature of about 85 to 160 °C and where the remaining heavy oil fractions are condensed and then transferred, through a heat exchanger, to a separator where after its combining with the sprinkling oil and separating from water and solid particles, the oil is collected in the tank Z1, while the synthesis gas which leaves the first condenser is transferred to the second condenser, where it is further cooled to a temperature of about 25 to 60 °C and where light oil fractions are condensed and collected in the tank Z2, whereas the synthesis gas, after its condensation of oil fractions is subjected to a final purification by dehydration and condensation of residual hydrocarbon vapours in a filtration column filled with a coalescent-filtration material, thus producing the final product in the form of a pure hydrocarbon gas.

2. The method according to claim 1, **characterised in that** sprinkling the gas by oil is carried out in the Venturi scrubber.

3. The method according to claim 1 or 2, **characterised in that** the fraction of solid impurities separated in a separator is subjected to another process of thermal decomposition in the reactor, and the separated water is used to cool down the carbonizate, while the pure oil is transferred again to the oil scrubber for sprinkling the synthesis gas.

4. The method according to claim 1, **characterised in that** the synthesis gas in a first condenser is cooled to a temperature of about 125 °C.

5. The method according to claim 1, **characterised in that** the synthesis gas in a second condenser is cooled to a temperature of about 40 °C.

6. A system for pyrolytic processing of polymer waste from the recycling of food packaging, comprising a feeder of the starting material, a thermal reactor, a collection chamber, and a plant for purification of post-pyrolytic gases produced in the pyrolysis process, the listed elements of the system being interconnected so that an exit of the feeder is connected to an entry of the thermal reactor, and an exit of the thermal reactor is connected to an entry of the collection chamber, whose exit is connected to an entry to a plant for purification of post-pyrolytic gases, **characterised in that** the plant for purification of post-pyrolytic gases consists of a cyclone, an oil scrubber, two condensers: the first condenser of the heavy oil fractions and the second condenser of the light oil fractions, and a filtration column, as well as of auxiliary equipments comprising a heat exchanger, an oil separator, and tanks for the products including a tank Z1 for heavy oil fractions, a tank Z2 for light oil fractions, a tank Z3 for post-filtration condensates, and a tank for purified gases, the listed elements of the plant being interconnected so that an entry of the cyclone is connected to an exit of the collection chamber, and an exit of the cyclone is connected to a gas entry of the oil scrubber, the oil scrubber having two exits, an oil exit and a gas exit, where an oil exit is connected, through a heat exchanger of scrubber oil, to an entry of the separator, whose exit is connected, through the tank Z1, again to an entry of the oil scrubber, thereby forming a scrubber oil feedback loop, while a gas exit of the oil scrubber is connected to an entry of the first condenser, which also has two exits, an oil exit and a gas exit, the oil exit of the first condenser being connected, through the exchanger, to an entry of the separator, and the gas exit being connected to an entry of the second condenser, which also has two exits, an oil exit and a gas exit, the oil exit being connected to the tank Z2 and the gas exit being connected to an entry of the filtration column, which has two exits, a gas exit and an exit for the post-filtration condensates, wherein the gas exit is connected to a tank for the purified gas while an exit for the post-filtration condensates is connected to an entry of the tank Z3 and optionally to the first condenser and to the second condenser.
